(19) Europäisches Patentamt

European Patent Office

Office européen des brevets

(11) **EP 1 077 155 B1**

(12) **EUROPÄISCHE PATENTSCHRIFT**

(45) Veröffentlichungstag und Bekanntmachung des Hinweises auf die Patenterteilung:
**27.08.2003 Patentblatt 2003/35**

(51) Int Cl.⁷: **B60N 2/48**

(21) Anmeldenummer: **00113321.4**

(22) Anmeldetag: **23.06.2000**

(54) **Fahrzeugsitz-Rückenlehne mit integrierter Schutzeinrichtung und Verfahren zur Vorbeugung unfallbedingter Verletzungen**

Vehicle seat backrest with integral protection device and method for preventing injuries caused by accidents

Dossier de siège de véhicule à dispositif de protection intégré et méthode de prévention de blessures dues à des accidents

(84) Benannte Vertragsstaaten:
**DE FR GB IT**

(30) Priorität: **17.08.1999 DE 19938904**

(43) Veröffentlichungstag der Anmeldung:
**21.02.2001 Patentblatt 2001/08**

(73) Patentinhaber: **Johnson Controls GmbH**
**51399 Burscheid (DE)**

(72) Erfinder:
• **Hake, Ernst-Jürgen**
**42477 Radevormwald (DE)**
• **Schmale, Gerhard**
**42499 Hückeswagen (DE)**

(74) Vertreter: **Kutzenberger, Helga, Dr.**
**Kutzenberger & Wolff,**
**Theodor-Heuss-Ring 23**
**50668 Köln (DE)**

(56) Entgegenhaltungen:
**DE-A- 2 232 726**      **DE-A- 19 738 201**
**DE-A- 19 743 339**     **US-A- 5 822 707**
**US-A- 5 882 071**

• **PATENT ABSTRACTS OF JAPAN vol. 016, no. 531 (M-1333), 30. Oktober 1992 (1992-10-30) & JP 04 197840 A (NISSAN MOTOR CO LTD), 17. Juli 1992 (1992-07-17)**
• **PATENT ABSTRACTS OF JAPAN vol. 1996, no. 11, 29. November 1996 (1996-11-29) & JP 08 187139 A (NEC HOME ELECTRON LTD), 23. Juli 1996 (1996-07-23)**

**Beschreibung**

Die vorliegende Erfindung betrifft eine Rückenlehne für einen Fahrzeugsitz mit einer integrierten Schutzeinrichtung gegen unfallbedingte Verletzungen im Falle eines Heckaufpralls, insbesondere gegen Halswirbelsyndrom bzw. Schleudertrauma, mit einem unteren, mit einem Sitzteil verbundenen Lehnenteil und mit einem oberen Lehnenteil, das um eine in der Rückenlehne quer zur Fahrzeuglängsachse verlaufende Achse relativ zum unteren Lehnenteil aus einer Normal-Gebrauchsstellung heraus in einer in Fahrtrichtung weisenden Schwenkrichtung durch ein in Schwenkrichtung wirkendes Drehmoment um einen Winkelbereich verschwenkbar ist.

Des weiteren betrifft die vorliegende Erfindung ein Verfahren zur Vorbeugung unfallbedingter Verletzungen eines Sitzbenutzers im Falle eines Heckaufpralls, insbesondere von Halswirbelsyndrom bzw. Schleudertrauma, mittels Verwendung einer derartigen Rückenlehne eines Fahrzeugsitzes und deren integrierten Schutzeinrichtung mit einem unteren, mit einem Sitzteil verbundenen Lehnenteil und mit einem oberen Lehnenteil, wobei das obere Lehnenteil bei einem Heckaufprall um eine in der Rückenlehne quer zur Fahrzeuglängsachse verlaufende Achse relativ zum unteren Lehnenteil aus einer Normal-Gebrauchsstellung heraus in einer in Fahrtrichtung weisenden Schwenkrichtung durch ein in Schwenkrichtung wirkendes Drehmoment um einen Winkelbereich in eine Sicherheitsstellung verschwenkt wird.

Die heutige Entwicklung in der Fahrzeugtechnik geht vielfach dahin, daß mit den zur Verfügung stehenden Materialien und Konstruktionsmethoden die Rückenlehnen der Fahrzeugsitze leicht, aber mit hoher Steifigkeit ausgeführt werden, um bei geringem Gewicht dennoch den auftretenden hohen Belastungen bei einem Unfallgeschehen standzuhalten und den Körper des Fahrzeug-Insassen ausreichend abzustützen. Dies führt aber dazu, daß beispielsweise bereits bei einem sogenannten Stoßstangen-Unfall bei niedriger Geschwindigkeit im Bereich von 10 bis 30 km/h (low speed crash), bei dem eine verhältnismäßig geringe Beschleunigung (ca. 8 - 20 g) des Körpers auftritt, eine Schädigung von dessen Halsmuskulatur und Halswirbelsäule entstehen kann, weil die Stoßkraft nahezu ungedämpft auf die Person einwirkt. Es tritt ein unerwünschter, der sogenannte Peitscheneffekt auf Kopf und Hals auf, der zu einem Schleudertrauma - einer Überdehnung und Überbelastung der Halswirbelsäule und der Haltemuskulatur des Kopfes - führt. Dieser Effekt und die dabei insbesondere im Halsbereich möglichen Wirbelsäulenverletzungen sind auch unter dem englischen Begriff "whiplash" bekannt.

Zum Schutz gegen diese Verletzungen sind passive und aktive Vorrichtungen bekannt, wobei letztere bei einem Unfall aktiv den Abstand zwischen dem Kopf der Person und der Kopfstütze der Rückenlehne verkürzen sollen. Eine solche bekannte (aktive) Vorrichtung der eingangs genannten Art, mit der ein Verfahren der eingangs genannten Art realisierbar ist, ist in der DE 197 43 339 A1 beschrieben. Dabei trifft der durch sein Beharrungsvermögen bei einem Aufprall relativ zur Fahrtrichtung in die Rückenlehne des Fahrzeugsitzes beschleunigte bzw. nach rückwärts gebogenen Körper des Fahrzeuginsassen (Sitzbenutzers) auf ein unterhalb der Schwenkachse des oberen Lehnenteils angebrachtes Prallblech auf, das schwenkbar mit dem oberen Lehnenteil, insbesondere mit einer Kopfstütze am Lehnenteil, verbunden ist. Durch die Relativbewegung des Prallblechs nach hinten schwenkt die Kopfstütze nach vorn. Mit der Kopfstützenbewegung soll die Wirkung des Peitscheneffektes vermindert werden.

Nachteilig ist hierbei, daß die Relativbewegung der Kopfstütze erst durch den in die Rückenlehne hineingeschleuderten Insassen erfolgt. Das obere Lehnenteil kann dadurch in Schwenkrichtung nur um einen Wert beschleunigt werden, der maximal gleich dem Beschleunigungswert ist, den der Fahrzeugsitz durch den Aufprall erfährt. Da sich aber das Bewegungsverhalten des Sitzbenutzers nicht in jedem Fall genau vorsehen läßt, können deshalb unter Umständen durch die aktive Gegenbewegung der Rückenlehne bzw. Kopfstütze sogar falsche, nicht gewollte, womöglich gefährliche, Effekte auftreten. So kann der Aufprall des Kopfes des Insassen sogar noch verstärkt und auch ein Aufsteigen des Insassen (Vertikalbewegung im Sitz nach oben) nicht vermieden werden. Bei einem Heckaufprall wird nämlich der Insasse derart in die meist aus der Senkrechten nach rückwärts geneigte Rückenlehne geschleudert, daß er das Bestreben hat, an der Rückenlehne, ähnlich einer Rampe, nach oben aufzusteigen. Dies führt in der Regel zum Versagen der Rückenlehne, die durch Überbelastung abknickt und nicht mehr in der Lage ist, den Insassen abzustützen. Insbesondere kann der Kopf des Sitzbenutzers so in eine Höhenposition gelangen, die sich oberhalb der Kopfstütze befindet, wo er nicht mehr abgestützt werden kann. Somit besteht bei der bekannten Rückenlehne ein erhebliches Unfallrestrisiko.

Der vorliegenden Erfindung liegt die Aufgabe zugrunde, mit konstruktiv wenig aufwendigen Mitteln eine Rückenlehne der genannten Art zu schaffen, deren Schutzeinrichtung einen verbesserten Verletzungsschutz des jeweiligen Sitzbenutzers gewährleistet, insbesondere durch eine verbesserte Abfangmöglichkeit und Dämpfung beim Auftreffen des Kopfes sowie des Oberkörpers der auf dem Sitz befindlichen Person auf die Kopfstütze bzw. die Rückenlehne.

Des weiteren liegt der vorliegenden Erfindung die Aufgabe zugrunde, mit wenig aufwendigen Mitteln ein Verfahren der genannten Art zu schaffen, mit dem das Unfallrestrisiko gegenüber dem bekannten Verfahren bedeutend reduziert werden kann.

Bei der erfindungsgemäßen Rückenlehne wird die der Erfindung zugrundeliegende Aufgabe durch die kennzeichnenden Merkmale des Anspruchs 1 gelöst. Weitere Merkmale der Rückenlehne sind in den abhängigen Vorrichtungsansprüchen angegeben.

Bei dem entsprechenden Verfahren unter Verwendung der erfindungsgemäßen Rückenlehne wird die der Erfindung zugrundeliegende Aufgabe dadurch gelöst, daß das obere Lehnenteil in Schwenkrichtung um einen größeren Betrag beschleunigt wird, als es ein gemessener oder ein empirisch bestimmter mittlerer Beschleunigungsbetrag ist, den der Fahrzeugsitz durch den Aufprall erfährt. Der Beschleunigungsbetrag, den der Fahrzeugsitz vornehmlich durch einen Heckaufprall erfährt, liegt dabei vorzugsweise im Bereich von etwa 80 bis 200 m/s$^2$, vorzugsweise im Bereich von etwa 60 bis 90 m/s$^2$.

Das Verfahren ist deshalb mit der erfindungsgemäßen Rückenlehne durchzuführen weil, die Schutzeinrichtung nicht durch den Sitzbenutzer, sondern durch die Mittel zur Detektierung des Heckaufpralls im Zusammenwirken mit der Einrichtung, die das auf das obere Lehnenteil wirkenden Drehmoment erzeugt, aktiviert wird.

Dabei kann das Verschwenken des oberen Lehnenteils vorzugsweise derart schnell verlaufen, daß das obere Lehnenteil sich in der Sicherheitsstellung befindet, ehe eine durch den Heckaufprall bedingte Kopfbewegung des Sitzbenutzers einsetzt. In der Sicherheitsstellung liegt das obere Lehnenteil unmittelbar am Körper des Sitzbenutzers an, so daß dieser sich vorteilhafterweise trotz der durch den Aufprall auf ihn wirkenden Beschleunigung nicht mehr nach hinten, entgegen der Fahrtrichtung des Fahrzeugs, frei bewegen und sich Unfallschäden zuziehen kann.

Das Verschwenken des oberen Lehnenteils aus seiner Normal-Gebrauchsstellung in die Sicherheitsstellung kann dabei bevorzugt etwa 35 bis 60 ms nach dem Heckaufprall abgeschlossen sein bzw. das obere Lehnenteil kann sich mit Vorteil nach dieser Zeit in der Sicherheitsstellung im Ruhezustand oder nahezu im Ruhezustand befinden. Dies ist möglich, da die Mittel zur Detektierung des Heckaufpralls, beispielsweise ein Beschleunigungssensor, derart ausgelegt werden können, daß sie innerhalb von etwa 8 bis 17 ms wirksam werden. Dadurch kann die drehmomentenerzeugende Einrichtung 15 bis 33 ms nach dem Heckaufprall aktiviert sein und die Sicherheitsstellung nach der o.g., äußerst kurzen Zeitspanne erreicht werden. Eine bevorzugt in der Sicherheitstellung vorliegender Ruhezustand des oberen Lehnenteils gewährleistet dabei, daß beim Aufeinandertreffen die schädliche Gegenbewegung von oberem Lehnenteil und Körper des Sitzbenutzers minimalisiert wird.

Bei der erfindungsgemäßen Rückenlehne ist es hinsichtlich der Effizienz der Schutzeinrichtung besonders vorteilhaft, wenn in oder an dem oberen Lehnenteil eine Kopfstütze befestigt ist. Allerdings kann das obere Lehnenteil auch derartig ausgebildet sein, daß es die Funktion einer Kopfstütze übernimmt. In jedem Fall kann sich dadurch die jeweilige, den Fahrzeugsitz benutzende Person - vornehmlich bei besonderem Schutz des Hals- und Kopfbereiches - gleichmäßig unter abbremsender Energieabsorption durch den Fahrzeugsitz in die Lehne - hineinbewegen.

Zusätzlich kann dabei bedarfsweise auch ein rein passiv wirkendes System in der Rückenlehne, z.B. ein System, welches sich während des Unfallgeschehens selbsttätig optimal an die jeweilige Person und deren Rücken-, Schulter- und/oder Hinterkopfkontur anpaßt, wobei die kinetische Energie in Formänderungsarbeit (plastische Dehnung/Stauchung) umgesetzt wird, Verwendung finden.

Bei Kopfstützen wird heute angestrebt, daß diese sich bei Vorliegen der Normal-Gebrauchsstellung der Rückenlehne in einer sogenannten Komfortstellung befinden, in der ihr Abstand zum Kopf eines Sitzbenutzers etwa 80 bis 120 mm beträgt. Durch die Schwenkbewegung des oberen Lehnenteils wird die Kopfstütze dann in eine sogenannte Abfangstellung überführt, in der ihr Abstand zum Kopf eines Sitzbenutzers Null oder nahezu Null ist. Demnach gilt bei Vorhandensein einer Kopfstütze alles, was vor- oder nachstehend über die Normal-Gebrauchsstellung und die Sicherheitsstellung des oberen Lehnenteils ausgesagt wird, auch für die Komfortund die Abfangstellung der Kopfstütze.

Ein weiterer bedeutender Vorteil der Erfindung besteht darin, daß bei einem Heckaufprall das Aufsteigen des Insassen im Sitz unterbunden werden kann, weil durch das rechtzeitige Vorliegen der Sicherheitsstellung des oberen Lehnenteils bzw. der Abfangstellung der Kopfstütze der Sitz in keinem Moment des Crash-Vorfalls eine rampenartige Form annehmen kann.

Weitere vorteilhafte Ausgestaltungsmerkmale der Erfindung sind in den Unteransprüchen sowie der folgenden Beschreibung enthalten.

Anhand der Zeichnung soll die Erfindung beispielhaft genauer erläutert werden. Dabei zeigen:

Fig. 1     eine teilweise schematisierte Seitenansicht einer erfindungsgemäßen Rückenlehne,

Fig. 2     eine vergrößerte seitliche Schnittansicht eines Details einer erfindungsgemäßen Rückenlehne,

Fig. 3     ein Zeitdiagramm zur Veranschaulichung des entsprechenden Verfahrens.

In den verschiedenen Figuren der Zeichnung sind gleiche Teile stets mit denselben Bezugszeichen versehen, so daß sie in der Regel auch jeweils nur einmal beschrieben werden.

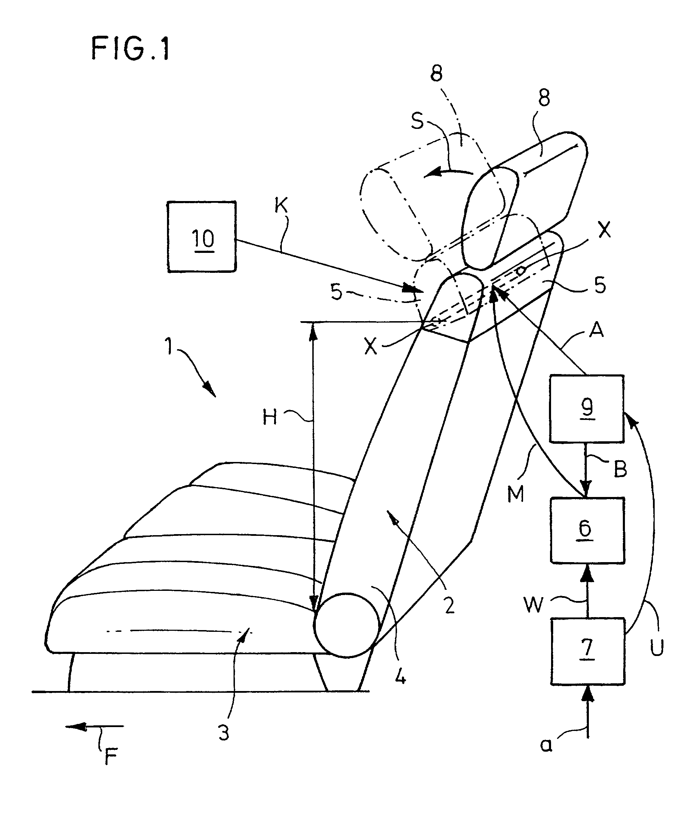

Wie sich zunächst aus Fig. 1 ergibt, besteht ein Fahrzeugsitz 1 aus einer erfindungsgemäßen Rückenlehne 2 und einem Sitzteil 3. In die Rückenlehne 2 ist eine Schutzeinrichtung integriert, die zum Schutz der jeweiligen Person gegen unfallbedingte Verletzungen, insbesondere gegen Halswirbelsyndrom bzw. Schleudertrauma im Falle eines Heckaufpralls, dient. Die Rükkenlehne 2 weist ein unteres, mit dem Sitzteil 3 verbundenes Lehnenteil 4 und ein oberes Lehnenteil 5 auf, das um eine in der Rückenlehne 2 quer zur Fahrzeuglängsachse verlaufende Achse X-X relativ zum unteren Lehnenteil 4 aus einer Normal-Gebrauchsstellung (in Fig. 1 mit Vollinie gezeichnet) heraus in einer in Fahrtrichtung F weisenden Schwenkrichtung S durch ein in Schwenkrichtung S wirkendes Drehmoment um einen Winkelbereich in eine Sicherheitsstellung (in Fig. 1 mit strichpunktierter Linie gezeichnet) verschwenkbar ist.

Erfindungsgemäß weist die Schutzeinrichtung einerseits eine Einrichtung 6 auf, die unabhängig von einer Belegung des Fahrzeugsitzes 2 das in Schwenkrichtung S auf das obere Lehnenteil 5 wirkende Drehmoment (Pfeil M in Fig. 1) erzeugt, andererseits weist sie Mittel 7 zur Detektierung eines Heckaufpralls auf. Sowohl die drehmomentenerzeugende Einrichtung 6 als auch die Detektierungsmittel 7 können unterschiedlich ausgebildet sein. Daher sind diese Teile der erfindungsgemäßen Rückenlehne 2 in Fig. 1 nur schematisiert (als Kästchen) gezeichnet.

Die drehmomentenerzeugende Einrichtung 6, die erfindungsgemäß einen Kraft- oder Energiespeicher aufweist, kann beispielsweise mit Vorteil durch ein vorgespanntes Federelement oder mehrere vorgespannte Federelemente gebildet sein.

Die Mittel 7 zur Detektierung des Heckaufpralls können mit Vorteil durch einen Fahrzeug-Crash-Sensor, wie einen Beschleunigungssensor, gebildet sein. Zur Detektierung eines sogenannten Low Speed Crash kann der Fahrzeug-Crash-Sensor dabei derart eingestellt sein, daß er bei einer Beschleunigung a von etwa 40 bis 80 m/s$^2$ anspricht.

Die Detektierungsmittel 7 stehen - angedeutet durch den Pfeil W - derart in Wirkverbindung mit der drehmomentenerzeugenden Einrichtung 6, daß die Einrichtung 6 im Falle des Heckaufpralls aktiviert und die Schwenkbewegung des oberen Lehnenteils 5 eingeleitet wird. Das untere Lehnenteil 4 verbleibt dabei in seiner ursprünglichen (Normal-Gebrauchs-) Stellung.

Das untere Lehnenteil 4 und das obere Lehnenteil 5 können bevorzugt zur Gewährleistung eines optimalen Schutzes des Sitzbenutzers in ihrer jeweiligen, nicht näher bezeichneten Länge definiert aufeinander abgestimmt sein bzw. die quer zur Fahrzeuglängsachse verlaufende Achse X-X, um die das obere Lehnenteil 5 verschwenkbar ist, kann in einer definierten Höhe H im Schulterbereich eines Sitzbenutzers, vorzugsweise etwa 400 bis 580 mm über dem Sitzteil 3, angeordnet sein.

In oder an dem oberen Lehnenteil 5 ist eine Kopfstütze 8 befestigt, die bei einem Heckaufprall aus einer Komfortstellung (in Fig. 1 mit Vollinie gezeichnet), in der ihr Abstand zum Kopf eines Sitzbenutzers etwa 80 bis 120 mm beträgt, in eine Abfangstellung (in Fig. 1 mit strichpunktierter Linie gezeichnet) bewegt wird, in der ihr Abstand zum Kopf eines Sitzbenutzers Null oder nahezu Null ist.

Erfindungsgemäß sind Arretiermittel 9 zur Fixierung des oberen Lehnenteils 5 in der Normal-Gebrauchsstellung vorgesehen. Die Fixierung wird durch den Pfeil A in Fig. 1 veranschaulicht. Auch diese Arretiermittel 9 können auf unterschiedliche Weise ausgebildet sein. Durch den Pfeil B in Fig. 1 ist dabei angedeutet, daß die Arretiermittel 9 die Wirkung der drehmomentenerzeugenden Einrichtung 6 blockieren können. Die Mittel 7 zur Detektierung eines Heckaufpralls stehen derart in Wirkverbindung (Pfeil U in Fig. 1) mit den Arretiermitteln 9 zur Fixierung des oberen Lehnenteils 5 in der Normal-Gebrauchsstellung, daß im Falle des Aufpralls die Fixierung A des oberen Lehnenteils 5 in der Normal-Gebrauchsstellung und die Blockierung B der drehmomentenerzeugenden Einrichtung 6 aufgehoben wird.

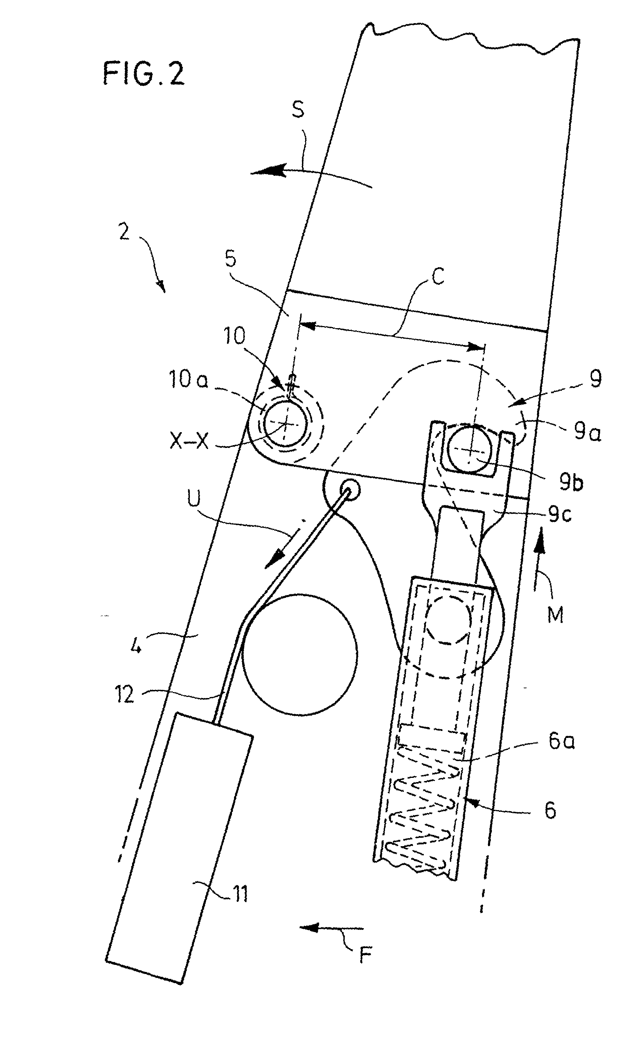

Weitere Arretiermittel 10, deren Wirkung durch den Pfeil K in Fig. 1 veranschaulicht wird und die nachstehend unter Bezugnahme auf Fig. 2 genauer erläutert werden, können mit Vorteil zur Fixierung des oberen Lehnenteils 5 gegen eine Rückbewegung aus der Sicherheitsstellung in die Normal-Gebrauchsstellung vorgesehen sein.

Fig. 2, die ein vergrößertes Detail einer erfindungsgemäßen Rückenlehne 2 im Bereich des Übergangs vom unteren Lehnenteil 4 zum oberen Lehnenteil 5 zeigt, veranschaulicht jeweils eine konkrete mögliche Ausführungsform für die Einrichtung 6, die unabhängig von einer Belegung des Fahrzeugsitzes 2 das in Schwenkrichtung S auf das obere Lehnenteil 5 wirkende Drehmoment M erzeugt, für die Arretiermittel 9 zur Fixierung des oberen Lehnenteils 5 in der Normal-Gebrauchsstellung, für die Arretiermittel 10 zur Fixierung des oberen Lehnenteils 5 gegen eine Rückbewegung aus der Sicherheitsstellung in die Normal-Gebrauchsstellung und für die Art und Weise, wie die Mittel 7 zur Detektierung des Heckaufpralls in Wirkverbindung (Pfeil U) mit den Arretiermitteln 9 zur Fixierung des oberen Lehnenteils 5 in der Normal-Gebrauchsstellung stehen können.

Die drehmomentenerzeugende Einrichtung 6 in Fig. 2 ist, wie bereits unter Bezugnahme auf Fig. 1 erwähnt wurde, als ein vorgespanntes Federelement - und zwar hier konkret als eine im unteren Lehnenteil 4 befestigte, auf das obere Lehnenteil 5 wirkende Druckfeder 6a ausgebildet. Durch eine solche Druckfeder 6a können vorteilhafterweise sehr hohe Stellkräfte bzw. ein sehr hohes Drehmoment M erzeugt werden, die ein Verschwenken des oberen Lehnenteils 5 im Millisekundenbereich ermöglichen. Die in der Rückenlehne 2 quer zur Fahrzeuglängsachse verlaufende Schwenkachse X-X für das obere Lehnenteil 5 ist dabei außermittig einer nicht näher bezeichneten etwa vertikal verlaufenden Achse der Rückenlehne 2 auf der in Fahrtrichtung F weisenden Seite und die Druckfeder 6a etwa parallel und außermittig zu der etwa vertikal verlaufenden Achse der Rückenlehne 2 auf der entgegen der Fahrtrichtung F weisenden Seite angeordnet, damit die Federkraft unter einem maximalen Hebelarm C wirksam wird. Dieser Hebelarm C wird durch die nicht näher bezeichnete Dicke der Rückenlehne 2 bestimmt, und führt in der dargestellten Ausführung zur Erzeugung eines maximalen Drehmoments M.

Alternativ könnte das Federelement z.B. auch durch eine um die Schwenkachse X-X angeordnete Drehfeder gebildet sein.

Für das Federelement hat es sich als vorteilhaft erwiesen, wenn dieses eine fallende Kennlinie aufweist, die zur Erzeugung einer starken Beschleunigung eine hohe Anfangskraft, aber nur eine sehr geringe Endkraft aufweist. Dies trägt insbesondere der Tatsache Rechnung, daß aufgrund seiner Anordnung im Fahrzeug das obere Lehnenteil 5 durch den Crash eine Beschleunigung erfährt, die entgegen der Wirkung des Federelementes steht. Es ist insbesondere äußerst vorteilhaft, wenn die drehmomentenerzeugende Einrichtung 6 derart ausgelegt ist, daß sie im Falle ihrer Aktivierung das obere Lehnenteil 5 in Schwenkrichtung S um einen größeren Betrag beschleunigt als es ein gemessener oder vorzugsweise ein empirisch bestimmter mittlerer der Beschleunigungsbetrag a ist, den der Fahrzeugsitz 2 durch den Heckaufprall erfährt, was durch die Federkennlinie eingestellt werden kann.

Die Arretiermittel 9 zur Fixierung des oberen Lehnenteils 5 in der Normal-Gebrauchsstellung können mit Vorteil - wie dies Fig. 2 zeigt - durch eine form- oder kraftformschlüssig wirkende Sperre, wie durch einen Rastbeschlag bzw. die dargestellten Rastelemente 9a, 9b, 9c, gebildet sein.

Die Art und Weise, wie die Mittel 7 zur Detektierung des Heckaufpralls in Wirkverbindung (Pfeil U) mit den Arretiermitteln 9 zur Fixierung des oberen Lehnenteils 5 in der Normal-Gebrauchsstellung stehen, zeigt sich in Fig. 2 darin, daß ein pyrotechnischer Aktivator 11 vorgesehen ist, der aufgrund eines Signals der (hier nicht dargestellten) Mittel 7 zur Detektierung des Heckaufpralls gezündet wird und die form- bzw. kraftformschlüssig wirkende Sperre der Rastelemente 9a, 9b, 9c beispielsweise über ein Zugmittel 12 aufhebt.

Die Mittel 7 zur Detektierung des Heckaufpralls könnten - alternativ zur Sensorausbildung - auch durch ein mechanisches Steuersystem gebildet sein, welches mechanische Teile aufweist, die - beschleunigt durch die Wirkung des Heckaufpralls - beispielsweise ein Sperrklinke (z.b. ähnlich der in Fig. 2 gezeigten) außer Eingriff, d.h. in eine entsperrte Lage bringen. Auch dies entspricht einer unmittelbaren Wirkverbindung U von den Mitteln 7 zur Detektierung des Heckaufpralls auf die Arretiermittel 9.

Der in Fig. 1 durch den Pfeil W angedeutete Fall, daß die Detektierungsmittel 7 direkt in Wirkverbindung mit der drehmomentenerzeugenden Einrichtung 6 stehen, ist beispielsweise dann gegeben, wenn die drehmomentenerzeugende Einrichtung 6 kein unter Vorspannung stehendes Federelement, sondern z.B. ein Kraft- bzw. Energiespeicher ähnlich dem pyrotechnischen Aktivator 11 ist.

Als Arretiermittel 10 zur Fixierung des oberen Lehnenteils 5 gegen eine Rückbewegung aus der Sicherheitsstellung in die Normal-Gebrauchsstellung ist gemäß Fig. 2 eine um die Schwenkachse X-X gelegte Schlingfeder 10a angeordnet. Diese Schlingfeder 10a legt sich, bei dem Versuch, das obere Lehnenteil 5 zurück (entgegen der Schwenkrichtung S) zu schwenken immer enger um die Drehachse X-X und hält diese fest, so daß ein Zurückschwenken nicht möglich ist. Alternativ zu der gezeigten Feder 10a wäre beispielsweise auch eine Ratschenausbildung der Arretiermittel 10 zur Fixierung des oberen Lehnenteils 5 zweckmäßig.

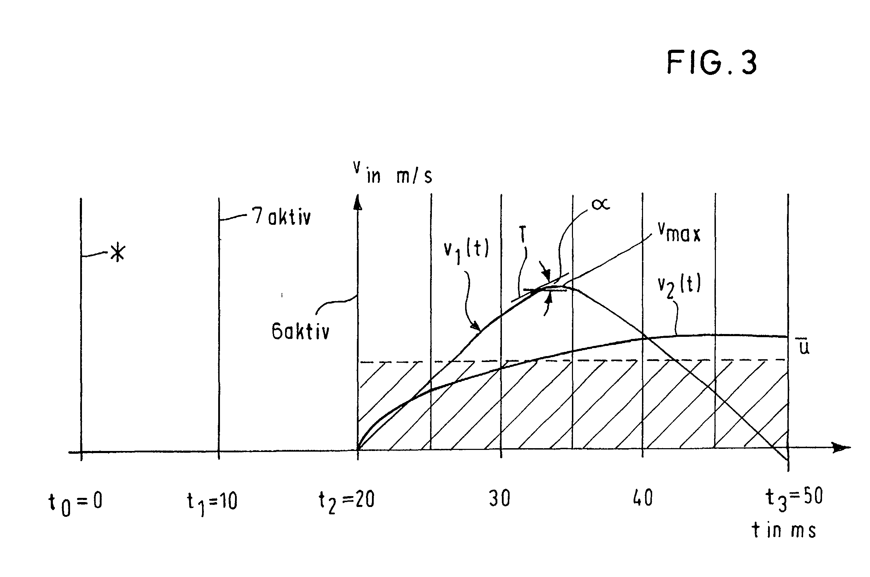

Fig. 3 dient (neben Fig. 1) zur Veranschaulichung des erfindungsgemäßen Verfahrens. Über eine Achse für die Zeit t (in Millisekunden) sind in Fig. 3 dabei die einzelnen Verfahrensschritte und ein Beispiel für den Verlauf der Schwenk-Geschwindigkeit v (in m/s) des oberen Lehnenteils 5 angegeben.

Das Verfahren gemäß den Ansprüchen 15 bis 24 dient der Vorbeugung unfallbedingter Verletzungen eines Sitzbenutzers im Falle eines Heckaufpralls, insbesondere von Halswirbelsyndrom bzw. Schleudertrauma. Dazu ist eine in die Rückenlehne 2 eines Fahrzeugsitzes 1 integrierte Schutzeinrichtung mit einem unteren, mit einem Sitzteil 3 verbundenen Lehnenteil 4 und mit einem oberen Lehnenteil 5 vorgesehen (Fig. 1). Das obere Lehnenteil 5 wird bei einem Heckaufprall um eine in der Rückenlehne 2 quer zur Fahrzeuglängsachse verlaufende Achse X-X relativ zum unteren Lehnenteil 4 aus einer Normal-Gebrauchsstellung heraus in einer in Fahrtrichtung F weisenden Schwenkrichtung S durch ein in Schwenkrichtung S wirkendes Drehmoment M um einen Winkelbereich in eine Sicherheitsstellung verschwenkt.

Dabei wird gemäß Verfahrensanspruch 15 das obere Lehnenteil 5 in Schwenkrichtung S um einen größeren Betrag beschleunigt, als es ein gemessener oder ein empirisch bestimmter mittlerer Beschleunigungsbetrag a ist, den der Fahrzeugsitz 1 durch den Heckaufprall erfährt.

Es kann dabei erfahrungsgemäß davon ausgegangen werden, daß dieser mittlere Beschleunigungsbetrag a im Bereich von etwa 35 bis 200 m/s$^2$, vorzugsweise im Bereich von etwa 60 bis 90 m/s$^2$, liegt.

Insbesondere kann nach diesem Verfahren das obere Lehnenteil 5 derart schnell verschwenkt werden, daß es sich in der Sicherheitstellung befindet, ehe eine durch den Heckaufprall bedingte Kopfbewegung des Sitzbenutzers einsetzt.

In Fig. 3 ist der Heckaufprall für den Zeitpunkt t = $t_0$ = 0 ms angenommen. Dies ist durch das Bezugszeichen "*" angedeutet. Das Einsetzen der durch den Heckaufprall bedingten Bewegung des Sitzbenutzers ist für den Zeitpunkt t = $t_3$ = 50 ms angenommen. Gemäß dem dargestellten Beispiel ist in dieser Zeit das Verschwenken des oberen Lehnenteils 5 aus der Normal-Gebrauchsstellung in die Sicherheitsstellung abgeschlossen. Die entsprechende Maximalzeit $t_3$ kann dabei erfindungsgemäß in einem weiteren Bereich, etwa von 35 bis 60 ms, schwanken.

Vorteilhafterweise wird das Drehmoment M bei diesem Verfahren durch eine Einrichtung 6 der Schutzeinrichtung erzeugt, wie sie oben beschrieben ist. Diese Einrichtung 6 erzeugt unabhängig von einer Belegung des Fahrzeugsitzes 2 das in Schwenkrichtung S auf das obere Lehnenteil 5 wirkende Drehmoment M. Der Heckaufprall wird vorteilhafterweise - ebenfalls wie oben beschrieben - durch Mittel 7 detektiert, die derart in Wirkverbindung mit der drehmomentenerzeugenden Einrichtung 6 stehen, daß sie die Einrichtung 6 im Falle des Heckaufpralls aktivieren und daß die Schwenkbewegung eingeleitet wird. Generell müssen alle Merkmale der vorbeschriebenen erfindungsgemäßen Rückenlehne 2 gemäß Anspruch 1 zur Realisierung des entsprechenden Verfahrens vorliegen.

Die Mittel 7 zur Detektierung des Heckaufpralls können dabei mit Vorteil innerhalb einer maximalen Zeitdauer t = = $t_1$ von etwa 8 bis 17 ms wirksam werden. Dies ist in Fig. 3 durch das Bezugszeichen "7 aktiv" bei $t_1$ = 10 ms angedeutet. Wie bereits erwähnt, kann das Verschwenken des oberen Lehnenteils 5 dabei bei einer Beschleunigung a von etwa 40 bis 80 m/s$^2$ ausgelöst werden.

Die drehmomentenerzeugende Einrichtung 6 kann mit Vorteil innerhalb einer Zeitdauer t = $t_2$ von maximal etwa 15 bis 33 ms nach dem Heckaufprall aktiviert sein. Dies ist in Fig. 3 durch das Bezugszeichen "6 aktiv" bei $t_2$ = 20 ms angedeutet.

Eine in oder an dem oberen Lehnenteil 5 befestigte Kopfstütze 8 kann nun nach der Aktivierung der drehmomentenerzeugenden Einrichtung 6 aus einer Komfortstellung, in der ihr Abstand zum Kopf eines Sitzbenutzers etwa 80 bis 120 mm beträgt, in eine Abfangstellung bewegt werden, in der ihr Abstand zum Kopf eines Sitzbenutzers Null oder nahezu Null ist. Dadurch ergibt sich der in der Zeitspanne zwischen $t_2$ und $t_3$ zurückzulegende Weg und eine mittlere Geschwindigkeit $\bar{u}$ (gestrichelte Linie).

Wenn dabei aber davon ausgegangen wird, daß sich das obere Lehnenteil 5 zunächst in der Komfortstellung und dann in der Sicherheitsstellung im Ruhezustand oder nahezu im Ruhezustand befindet, ist ein zeitlich veränderlicher Geschwindigkeitsverlauf v (t) für die Schwenkbewegung der Kopfstütze 8 bzw. des oberen Lehnenteils 5 zugrundezulegen. Einen ersten und einen zweiten solchen Verlauf $v_1$ (t), $v_2$ (t) zeigen exemplarisch, jedoch stark idealisiert (ohne Beachtung der Gegenwirkung durch den Crash und unter Annahme einer in erster Näherung linearen Bewegung) die entsprechenden Kurven in Fig. 3.

Der beim Verschwenken zurückgelegte Weg s entspricht dabei der Fläche unter der Kurve, wobei die

Beziehung

$$s=\int_{t_2}^{t_3} v(t)\, dt = \bar{u}(t_3 - t_2)$$

gilt. Die dabei veränderliche Beschleunigung a kann stattdessen nach der Beziehung

$$a = \frac{dv(t)}{dt} = \tan\alpha$$

bestimmt werden, wobei $\alpha$ der Anstiegswinkel einer an die Kurve angelegten Tangente T ist. Aus dem Verlauf der Beschleunigung kann die für die Durchführung der Schwenkbewegung erforderliche Kraft (z.B. die Kennlinie eines Federelementes als drehmomentenerzeugende Einrichtung 6) abgeleitet werden.

Entsprechend dem ersten Geschwindigkeitsverlauf $v_1$ (t) wird die Kopfstütze 8 bzw. das obere Lehnenteil 5 auf eine Maximalgeschwindigkeit $v_{max}$ beschleunigt und dann wieder abgebremst. Zum Abbremsen könnte dabei ebenfalls ein Federelement eingesetzt werden, dessen Wirkung der Wirkung der Druckfeder 6a entgegengerichtet ist. Für die gemeinsame (summarische) Kennlinie dieses Federelementes und der Druckfeder 6a in der drehmomentenerzeugenden Einrichtung 6 kann so der oben beschriebene fallende - auch nichtlineare (z.B. mit progessivem oder degressivem Anstieg) - Verlauf bedarfsweise einfach eingestellt werden.

Entsprechend dem zweiten Geschwindigkeitsverlauf $v_2$ (t) braucht die Kopfstütze 8 bzw. das obere Lehnenteil 5, um die mittlere Geschwindigkeit ü zu erreichen, nur stetig auf eine geringeren Geschwindigkeitswert v beschleunigt zu werden, als dies nach dem ersten Geschwindigkeitsverlauf $v_1$ (t) der Fall ist, da nach Erreichen einer Maximalgeschwindigkeit nicht wieder ein stetiges Abbremsen erfolgt. Um zu erreichen, daß sich das obere Lehnenteil 5 in der Sicherheitsstellung im Ruhezustand oder nahezu im Ruhezustand befindet, kann in diesem Fall in einer entsprechenden Winkelstellung ein Anschlag vorgesehen sein. Durch einen solchen Anschlag kann erreicht werden, daß die Geschwindigkeit in der Sicherheitsstellung schlagartig auf Null zurückgeht.

Die vorstehend nicht bezeichnete, in die erfindungsgemäße Rückenlehne 2 integrierte Schutzeinrichtung gegen unfallbedingte Verletzungen wird in der beschriebenen Ausführung der Erfindung durch das untere Lehnenteil 4, das um die Achse X-X schwenkbare obere Lehnenteil 5 mit der Kopfstütze 8, die drehmomentenerzeugende Einrichtung 6, die Mittel 7 zur Detektierung eines Heckaufpralls, die Arretiermittel 9 zur Fixierung des oberen Lehnenteils 5 in der Normal-Gebrauchsstellung, die Arretiermittel 10 zur Fixierung des oberen Lehnenteils 5 gegen eine Rückbewegung aus der Sicherheitsstellung in die Normal-Gebrauchsstellung sowie den pyrotechnischen Aktivator 11 einschließlich des Zugmittels 12 gebildet. Wie aber bereits aus der vorstehenden Beschreibung hervorgeht, ist die Erfindung - sowohl die Rückenlehne 2, als auch das Verfahren - nicht auf das dargestellte Ausführungsbeispiel beschränkt. Was die zeichnerische Darstellung anbelangt, so sind die Fig. 1 bis 3 nicht maßstabsgetreu, sondern schematisiert und teilweise (wie z.B. der Winkel zwischen oberem Lehnenteil 5 und unterem Lehnenteil 4 in Fig. 1) zur besseren Veranschaulichung übertrieben dargestellt.

Bezugszeichen

| | |
|---|---|
| * | Crash |
| 1 | Fahrzeugsitz |
| 2 | Rückenlehne |
| 3 | Sitzteil |
| 4 | unteres Lehnenteil von 2 |
| 5 | oberes Lehnenteil von 2 |
| 6 | drehmomentenerzeugende Einrichtung |
| 6a | Druckfeder |
| 6 aktiv | Aktivzustand von 6 |
| 7 | Mittel zur Detektierung eines Heckaufpralls |
| 7 aktiv | Aktivzustand von 7 |
| 8 | Kopfstütze |
| 9 | Arretiermittel |
| 9a | Rastelement |
| 9b | Rastelement |
| 9c | Rastelement |
| 10 | Arretiermittel |
| 10a | Schlingfeder |
| 11 | pyrotechnischer Aktivator |
| 12 | Zugmittel |
| | |
| A | Wirkverbindung von 9 auf 5 |
| a | Beschleunigung |
| B | Wirkverbindung von 9 auf 6 |
| C | Hebelarm für M |
| F | Fahrtrichtung |
| H | Höhe, Abstand zwischen 3 und X-X |
| K | Wirkverbindung von 10 auf 5 |
| M | Drehmoment, Wirkverbindung von 6 auf 5 |
| S | Schwenkrichtung von 5 bzw. 8 |
| T | Tangente an v |
| t | Zeit |
| $t_0$ | Crashzeitpunkt |
| $t_1$ | Zeitpunkt 7 aktiv |
| $t_2$ | Zeitpunkt 6 aktiv |
| $t_3$ | Zeitpunkt Schwenkbewegung von 5 abgeschlossen |
| U | Wirkverbindung von 7 auf 9 |
| $\bar{u}$ | mittlere Schwenkgeschwindigkeit von 5 |
| | bzw. 8 |
| v | Schwenkgeschwindigkeit von 5 bzw. 8 |
| $v_{max}$ | Maximalwert von $v_1$ |
| $v_1$ | erster Verlauf von v |
| $v_2$ | zweiter Verlauf von v |
| W | Wirkverbindung von 7 auf 6 |
| X-X | Schwenkachse von 5 |
| | |
| $\alpha$ | Anstiegswinkel von T |

**Patentansprüche**

1. Rückenlehne (2) für einen Fahrzeugsitz (1) mit einer integrierten Schutzeinrichtung (4, 5, 6, 7, 8, 9, 10, 11, 12) gegen unfallbedingte Verletzungen eines Sitzbenutzers im Falle eines Heckaufpralls, insbesondere gegen Halswirbelsyndrom bzw. Schleudertrauma, mit einem unteren, mit einem Sitzteil (3) verbundenen Lehnenteil (4) und mit einem oberen Lehnenteil (5), das um eine in der Rückenlehne (2) quer zur Fahrzeuglängsachse verlaufende Achse (X-X) relativ zum unteren Lehnenteil (4) aus einer Normal-Gebrauchsstellung heraus in einer in Fahrtrichtung (F) weisenden Schwenkrichtung (S) durch ein in Schwenkrichtung (S) wirkendes Drehmoment (M) um einen Winkelbereich in eine Sicherheitsstellung verschwenkbar ist,
**dadurch gekennzeichnet, dass**
die Schutzeinrichtung (4, 5, 6, 7, 8, 9, 10, 11, 12) einen Kraft- oder Energiespeicher (6) aufweist, der unabhängig von einer Belegung des Fahrzeugsitzes (1) das in Schwenkrichtung (S) auf das obere Lehnenteil (5) wirkende Drehmoment (M) erzeugt, sowie Mittel (7) zur Detektierung eines Heckaufpralls, die direkt in Wirkverbindung mit Arretiermitteln (9) zur Fixierung (A) des oberen Lehnenteils (5) in der Normal-Gebrauchsstellung derart stehen, dass im Fall des Aufpralls die Fixierung (A) des oberen Lehnenteils (5) in der Normal-Gebrauchsstellung und eine Blockierung (B) der den Kraft- oder Energiespeichers (6) aufweisenden drehmomenterzeugenden Einrichtung aufgehoben werden, so dass die Schwenkbewegung eingeleitet wird.

2. Rückenlehne nach Anspruch 1,
**dadurch gekennzeichnet, daß** in oder an dem oberen Lehnenteil (5) eine Kopfstütze (8) befestigt ist, die bei einem Heckaufprall aus einer Komfortstellung, in der ihr Abstand zum Kopf eines Sitzbenutzers etwa 80 bis 120 mm beträgt, in eine Abfangstellung bewegt wird, in der ihr Abstand zum Kopf eines Sitzbenutzers Null oder nahezu Null ist.

3. Rückenlehne nach Anspruch 1 oder 2,
**dadurch gekennzeichnet, daß** die drehmomentenerzeugende Einrichtung (6) durch ein vorgespanntes Federelement oder mehrere vorgespannte Federelemente gebildet ist.

**4.** Rückenlehne nach Anspruch 3,
**dadurch gekennzeichnet, daß** die Federelemente als einzelne oder in der Summe eine fallende Kennlinie aufweisen, die zur Erzeugung einer starken Beschleunigung eine hohe Anfangskraft, aber nur eine sehr geringe Endkraft aufweist.

**5.** Rückenlehne nach Anspruch 3 oder 4,
**dadurch gekennzeichnet, daß** das Federelement durch eine um die Schwenkachse (X-X) angeordnete Drehfeder gebildet ist.

**6.** Rückenlehne nach Anspruch 3 oder 4,
**dadurch gekennzeichnet, daß** das Federelement durch eine im unteren Lehnenteil (4) befestigte, auf das obere Lehnenteil (5) wirkende Druckfeder (6a) gebildet ist.

**7.** Rückenlehne nach einem der Ansprüche 1 bis 6,
**gekennzeichnet durch** Arretiermittel (10) zur Fixierung (K) des oberen Lehnenteils (5) gegen eine Rückbewegung aus der Sicherheitsstellung in die Normal-Gebrauchsstellung.

**8.** Rückenlehne nach Anspruch 7,
**dadurch gekennzeichnet, daß** die Arretiermittel (9) zur Fixierung (B) des oberen Lehnenteils (5) in der Normal-Gebrauchsstellung durch Rastelemente (9a, 9b, 9c), insbesondere einen Rastbeschlag, gebildet sind.

**9.** Rückenlehne nach Anspruch 7 oder 8,
**dadurch gekennzeichnet, daß** die Arretiermittel (10) zur Fixierung (K) des oberen Lehnenteils (5) gegen eine Rückbewegung aus der Sicherheitsstellung in die Normal-Gebrauchsstellung durch Federelemente, wie eine Schlingfeder (10a), Rastelemente oder eine Ratsche gebildet sind.

**10.** Rückenlehne nach einem der Ansprüche 1 bis 9,
**dadurch gekennzeichnet, daß** die Mittel (7) zur Detektierung eines Heckaufpralls durch einen Fahrzeug-Crash-Sensor, wie einen Beschleunigungssensor, gebildet sind.

**11.** Rückenlehne nach Anspruch 10,
**dadurch gekennzeichnet, daß** der Fahrzeug-Crash-Sensor derart eingestellt ist, daß er bei einer Beschleunigung (a) von etwa 40 bis 80 m/s$^2$ anspricht.

**12.** Rückenlehne nach einem der Ansprüche 1 bis 11,
**dadurch gekennzeichnet, daß** die Mittel zur Detektierung (7) eines Heckaufpralls durch ein, vorzugsweise im Fahrzeugsitz befindliches, mechanisches Steuersystem gebildet sind.

**13.** Rückenlehne nach einem der Ansprüche 1 bis 12,
**dadurch gekennzeichnet, daß** die drehmomentenerzeugenden Einrichtung (6) derart ausgelegt ist, daß sie im Falle ihrer Aktivierung das obere Lehnenteil (5) in Schwenkrichtung (S) um einen größeren Betrag beschleunigt als es ein gemessener oder vorzugsweise ein empirisch bestimmter mittlerer der Beschleunigungsbetrag (a) ist, den der Fahrzeugsitz (2) durch den Heckaufprall erfährt.

**14.** Rückenlehne nach einem der Ansprüche 1 bis 13,
**dadurch gekennzeichnet, daß** das untere Lehnenteil (4) und das obere Lehnenteil (5) in ihrer jeweiligen Länge definiert aufeinander abgestimmt sind bzw. daß die quer zur Fahrzeuglängsachse verlaufende Achse (X-X), um die das obere Lehnenteil (5) verschwenkbar ist, in einer definierten Höhe (H) im Schulterbereich eines Sitzbenutzers, vorzugsweise etwa 400 bis 580 mm über dem Sitzteil (3), angeordnet ist.

**15.** Verfahren zur Vorbeugung unfallbedingter Verletzungen eines Sitzbenutzers im Falle eines Heckaufpralls, insbesondere von Halswirbelsyndrom bzw. Schleudertrauma, mittels Verwendung der Rückenlehne (2) gemäß Anspruch 1,
**dadurch gekennzeichnet, daß** das obere Lehnenteil (5) in Schwenkrichtung (S) um einen größeren Betrag beschleunigt wird, als es ein gemessener oder ein empirisch bestimmter mittlerer Beschleunigungsbetrag (a) ist, den der Fahrzeugsitz (1) durch den Heckaufprall erfährt.

**16.** Verfahren nach Anspruch 15,
**dadurch gekennzeichnet, daß** der empirisch bestimmte mittlere Beschleunigungsbetrag (a), den der Fahrzeugsitz (1) durch den Heckaufprall erfährt, im Bereich von etwa 35 bis 200 m/s$^2$, vorzugsweise im Bereich von etwa 60 bis 90 m/s$^2$, liegt.

**17.** Verfahren nach Anspruch 15 oder 16,
**dadurch gekennzeichnet, daß** das Verschwenken des oberen Lehnenteils (5) derart schnell verläuft, daß das obere Lehnenteil (5) sich in der Sicherheitstellung befindet, ehe eine durch den Heckaufprall bedingte Kopfbewegung des Sitzbenutzers einsetzt.

**18.** Verfahren nach Anspruch 17,
**dadurch gekennzeichnet, daß** sich das obere Lehnenteil (5) in der Sicherheitsstellung im Ruhezustand oder nahezu im Ruhezustand befindet.

**19.** Verfahren nach einem der Ansprüche 15 bis 18,
**dadurch gekennzeichnet, daß** das Verschwenken des oberen Lehnenteils (5) aus der Normal-Gebrauchsstellung in die Sicherheitsstellung etwa maximal 35 bis 60 ms nach dem Heckaufprall abgeschlossen ist.

**20.** Verfahren nach einem der Ansprüche 15 bis 19, **dadurch gekennzeichnet, daß** das Drehmoment (M) durch eine Einrichtung (6) der Schutzeinrichtung (4, 5, 6, 7, 8, 9, 10, 11, 12) erzeugt wird, die unabhängig von einer Belegung des Fahrzeugsitzes (2) das in Schwenkrichtung (S) auf das obere Lehnenteil (5) wirkende Drehmoment (M) erzeugt, und daß der Heckaufprall durch Mittel (7) detektiert wird, die derart in Wirkverbindung (W; U, B) mit der drehmomentenerzeugenden Einrichtung (6) stehen, daß sie die Einrichtung (6) im Falle des Heckaufpralls aktivieren und daß die Schwenkbewegung eingeleitet wird.

**21.** Verfahren nach Anspruch 20, **dadurch gekennzeichnet, daß** die Mittel (7) zur Detektierung des Heckaufpralls innerhalb von maximal etwa 8 bis 17 ms wirksam werden.

**22.** Verfahren nach Anspruch 20 oder 21, **dadurch gekennzeichnet, daß** die drehmomentenerzeugende Einrichtung (6) maximal etwa 15 bis 33 ms nach dem Heckaufprall aktiviert ist.

**23.** Verfahren nach einem der Ansprüche 15 bis 22, **dadurch gekennzeichnet, daß** das Verschwenken des oberen Lehnenteils (5) bei einer Beschleunigung (a) von etwa 40 bis 80 m/s$^2$ ausgelöst wird.

**24.** Verfahren nach einem der Ansprüche 15 bis 23, **gekennzeichnet durch** die Verwendung einer Rückenlehne (2) nach einem der Ansprüche 2 bis 17.

**Claims**

**1.** Backrest (2) for a vehicle seat (1) having an integrated protection device (4, 5, 6, 7, 8, 9, 10, 11, 12) against accident-induced injuries of a seat user in the event of a rear impact, in particular against cervical vertebra syndrome or whiplash trauma, having a lower backrest part (4) which is connected to a seat part (3) and having an upper backrest part (5) which can be pivoted relative to the lower backrest part (4) about an axis (X-X) running transversely with respect to the longitudinal axis of the vehicle in the backrest (2), from a normal operational position in a pivoting direction (S), which points in the direction of travel (F), and through an angled region into a safety position by means of a torque (M) which acts in the pivoting direction (S), **characterized by** that the protection device (4, 5, 6, 7, 8, 9, 10, 11, 12) has a force or energy accumulator device (6) which, irrespective of whether the vehicle seat (1) is occupied produces the torque (M) which acts in the pivoting direction (S) on the upper backrest part (5), and also means (7) for detecting a rear impact, which means are directly in operative connection with locking means (9) for fixing (A) the upper backrest part (5) in the normal operational position in such a manner that, in the event of the impact, the fixing (A) of the upper backrest part (5) in the normal operational position and a blocking (B) of the torque-producing device having the force or energy accumulator (6) are cancelled, so that the pivoting movement is initiated.

**2.** Backrest according to Claim 1, **characterized by** that a head restraint (8) is fastened in or on the upper backrest part (5), which head restraint is moved in the event of a rear impact from a comfort position, in which its distance from the head of a seat user is approximately 80 to 120 mm, into an intercepting position, in which its distance from the head of a seat user is zero or virtually zero.

**3.** Backrest according to Claim 1 or 2, **characterized by** that the torque-producing device (6) is formed by a prestressed spring element or by a plurality of prestressed spring elements.

**4.** Backrest according to Claim 3, **characterized by** that the spring elements have, as individual spring elements or in total, a falling characteristic line which, in order to produce a pronounced acceleration, has a high initial force, but only a very low end force.

**5.** Backrest according to Claim 3 or 4, **characterized by** that the spring element is formed by a torsion spring which is arranged about the pivoting axis (X-X).

**6.** Backrest according to Claim 3 or 4, **characterized by** that the spring element is formed by a compression spring (6a) which is fastened in the lower backrest part (4) and acts on the upper backrest part (5).

**7.** Backrest according to one of Claims 1 to 6, **characterized by** locking means (10) for fixing (K) the upper backrest part (5) against moving back from the safety position into the normal operational position.

**8.** Backrest according to Claim 7, **characterized by** that the locking means (9) for fixing (B) the upper backrest part (5) in the normal operational position are formed by latching elements (9a, 9b, 9c), in particular a latching fitting.

**9.** Backrest according to Claim 7 or 8, **characterized by** that the locking means (10) for fixing (K) the upper backrest part (5) against moving back from the safety position into the normal operational position are formed by spring elements, such as a loop spring (10a), latching elements or a ratchet.

10. Backrest according to one of Claims 1 to 9, **characterized by** that the means (7) for detecting a rear impact are formed by a vehicle crash sensor, such as an acceleration sensor.

11. Backrest according to Claim 10, **characterized by** that the vehicle crash sensor is set in such a manner that it responds at an acceleration (a) of approximately 40 to 80 $m/s^2$.

12. Backrest according to one of Claims 1 to 11, **characterized by** that the means (7) for detecting a rear impact are formed by a mechanical control system which is preferably situated in the vehicle seat.

13. Backrest according to one of Claims 1 to 12, **characterized by** that the torque-producing device (6) is designed in such a manner that in the event of its activation, the upper backrest part (5) is accelerated in the pivoting direction (S) by a greater amount than a measured or, preferably, an empirically determined, average acceleration amount (a) which the vehicle seat (2) experiences because of the rear impact.

14. Backrest according to one of Claims 1 to 13, **characterized by** that the lower backrest part (4) and the upper backrest part (5) are co-ordinated with each other in their respective lengths in a defined manner, and in that the axis (X-X) which runs transversely with respect to the longitudinal axis of the vehicle and about which the upper backrest part (5) can be pivoted, is arranged at a defined height (H) in the shoulder region of a seat user, preferably approximately 400 to 580 mm above the seat part (3).

15. Method for preventing accident-induced injuries of a seat user in the event of a rear impact, in particular cervical vertebra syndrome or whiplash trauma, using the backrest (2) according to Claim 1, **characterized by** that the upper backrest part (5) is accelerated in the pivoting direction (S) by a larger amount than a measured or an empirically determined, average acceleration amount (a) which the vehicle seat (1) experiences because of the rear impact.

16. Method according to Claim 15, **characterized by** that the empirically determined, average acceleration amount (a) which the vehicle seat (1) experiences because of the rear impact lies in the range of approximately 35 to 200 $m/s^2$, preferably in the range of approximately 60 to 90 $m/s^2$.

17. Method according to Claim 15 or 16, **characterized by** that the pivoting of the upper backrest part (5) proceeds rapidly in such a manner that the upper backrest part (5) is in the safety position before the start of the head movement of the seat user, which head movement is induced by the rear impact.

18. Method according to Claim 17, **characterized by** that in the safety position the upper backrest part (5) is in an inoperative state or virtually in an inoperative state.

19. Method according to one of Claims 15 to 18, **characterized by** that the pivoting of the upper backrest part (5) from the normal operative position into the safety position is terminated approximately at most 35 to 60 ms after the rear impact.

20. Method according to one of Claims 5 to 19, **characterized by** that the torque (M) is produced by a device (6) of the protection device (4, 5, 6, 7, 8, 9, 10, 11, 12), which device irrespective of whether the vehicle seat (2) is occupied produces the torque (M) which acts in the pivoting direction (S) on the upper backrest part (5), and in that the rear impact is detected by means (7) which are in operative connection (W; U,B) with the torque-producing device (6) in such a manner that the said means activate the device (6) in the event of the rear impact, and in that the pivoting movement is initiated.

21. Method according to Claim 20, **characterized by** that the means (7) for detecting the rear impact are effective within at most approximately 8 to 17 ms.

22. Method according to Claim 20 or 21, **characterized by** that the torque-producing device (6) is activated at most approximately 15 to 33 ms after the rear impact.

23. Method according to one of Claims 15 to 22, **characterized by** that the pivoting of the upper backrest part (5) is triggered at an acceleration (a) of approximately 40 to 80 $ms/s^2$.

24. Method according to one of Claims 15 to 23, **characterized by** the use of a backrest (2) according to one of Claims 2 to 17.

**Revendications**

1. Dossier (2) pour un siège de véhicule (1), auquel est intégré un dispositif (4, 5, 6, 7, 8, 9, 10, 11, 12) de protection contre les blessures provoquées par un accident à un utilisateur du siège en cas de choc arrière, en particulier contre le syndrome des vertèbres du cou ou le "coup du lapin", avec une partie inférieure de dossier (4) reliée à une partie de siège (3) et une partie supérieure de dossier (5) qu'un couple de rotation (M) qui agit dans le sens (S) du pivotement permet de faire pivoter dans une direction (S) de pivotement orientée dans le sens du déplacement (F) du véhicule par rapport à la partie inférieure (4) du dossier autour d'un axe (X-X) qui s'étend dans le dossier (2) transversalement à l'axe longitudinal du véhicule, sur une plage angulaire qui s'étend entre une position d'utilisation normale et une position de sécurité,

**caractérisé en ce que**

le dispositif de protection (4, 5, 6, 7, 8, 9, 10, 11, 12) présente un accumulateur (6) de force ou d'énergie qui crée, indépendamment de l'occupation du siège (1) du véhicule, le couple de rotation (M) qui agit sur la partie supérieure (5) du dossier dans le sens de pivotement (S), ainsi que des moyens (7) pour détecter un choc arrière qui sont en liaison fonctionnelle directe avec des moyens de blocage (9) pour immobiliser (A) la partie supérieure (5) du dossier dans la position normale d'utilisation de telle sorte qu'en cas de choc, la fixation (A) de la partie supérieure (5) du dossier dans la position normale d'utilisation et un blocage (B) du dispositif qui crée un couple de rotation et présente l'accumulateur (6) de force ou d'énergie sont supprimés, ce qui permet le déplacement de pivotement.

2. Dossier selon la revendication 1, **caractérisé en ce qu'**un appui-tête (8), qui en cas de choc arrière est déplacé depuis une position de confort dans laquelle sa distance par rapport à la tête dans l'utilisateur du siège vaut environ 80 à 120 mm jusque dans une position de reprise dans laquelle sa distance par rapport à la tête d'un utilisateur du siège est nulle ou presque nulle, est fixé dans ou sur la partie supérieure (5) du dossier.

3. Dossier selon la revendication 1 ou 2, **caractérisé en ce que** le dispositif (6) qui crée un couple de rotation est formé par un élément à ressort précontraint ou plusieurs éléments de ressort précontraints.

4. Dossier selon la revendication 3, **caractérisé en ce que** les éléments de ressort présentent individuellement ou cumulativement une ligne caractéristique décroissante qui, pour créer une forte accélération, présente une force initiale élevée mais une force finale très petite.

5. Dossier selon la revendication 3 ou 4, **caractérisé en ce que** l'élément de ressort est formé par un ressort en torsion disposé autour de l'axe de pivotement (X-X).

6. Dossier selon la revendication 3 ou 4, **caractérisé**

en ce que l'élément de ressort est formé par un ressort de compression (6a) fixé dans la partie inférieure (4) du dossier et agissant sur la partie supérieure (5) du dossier.

7. Dossier selon l'une des revendications 1 à 6, **caractérisé par** des moyens (10) de blocage pour la fixation (K) de la partie supérieure (5) du dossier contre un déplacement vers l'arrière hors de la position de sécurité jusque dans la position normale d'utilisation.

8. Dossier selon la revendication 7, **caractérisé en ce que** les moyens de blocage (9) pour la fixation (B) de la partie supérieure (5) du dossier dans la position normale d'utilisation sont formés par des éléments d'encliquetage (9a, 9b, 9c), en particulier une ferrure d'encliquetage.

9. Dossier selon la revendication 7 ou 8, **caractérisé en ce que** les moyens de blocage (10) pour la fixation (K) de la partie supérieure (5) du dossier pour empêcher un déplacement vers l'arrière hors de la position de sécurité jusque dans la position normale d'utilisation sont formés par des éléments de ressort, par exemple un ressort en boucle (10a), des éléments d'encliquetage ou un mécanisme à rochet.

10. Dossier selon l'une des revendications 1 à 9, **caractérisé en ce que** les moyens (7) pour la détection d'un choc arrière sont formés par un capteur de collision du véhicule, par exemple un capteur d'accélération.

11. Dossier selon la revendication 10, **caractérisé en ce que** le capteur de collision du véhicule est réglé de telle sorte qu'il réagit à une accélération (a) d'environ 40 à 80 m/s$^2$.

12. Dossier selon l'une des revendications 1 à 11, **caractérisé en ce que** les moyens pour la détection (7) d'un choc arrière sont formés par un système de commande mécanique, de préférence situé dans le siège du véhicule.

13. Dossier selon l'une des revendications 1 à 12, **caractérisé en ce que** le dispositif (6) qui crée le couple de rotation est conçu de telle sorte qu'en cas d'une activation, la partie supérieure (5) du dossier est accélérée dans la direction de pivotement (S) d'une valeur plus élevée qu'une valeur (a) mesurée, de préférence une valeur moyenne définie empiriquement, de l'accélération que le siège du véhicule (2) subit en cas de choc arrière.

14. Dossier selon l'une des revendications 1 à 13, **caractérisé en ce que** la partie inférieure (4) du dossier et la partie supérieure (5) du dossier ont une longueur définie l'une par rapport à l'autre et **en ce que** l'axe (X-X) qui s'étend transversalement par rapport à l'axe longitudinal du véhicule et autour duquel la partie supérieure (5) du dossier peut pivoter, est disposé à une hauteur définie (H) dans la région des épaules d'un utilisateur du siège, de préférence à 400 à 580 mm au-dessus de la partie de siège (3).

15. Procédé pour prévenir des blessures d'un utilisateur de siège provoquées par un accident dans le cas d'un choc arrière, en particulier du syndrome des vertèbres cervicales ou du "coup du lapin" par utilisation d'un dossier (2) selon la revendication 1, **caractérisé en ce que** la partie supérieure (5) du dossier est accélérée dans la direction du pivotement (S) d'une valeur plus élevée qu'une valeur (a) de l'accélération, mesurée ou moyenne déterminée empiriquement, que le siège (1) du véhicule subit pendant le choc arrière.

16. Procédé selon la revendication 15, **caractérisé en ce que** la valeur (a) de l'accélération moyenne définie empiriquement que le siège (1) du véhicule subit en cas de choc arrière est comprise dans la plage d'environ 35 à 200 m/s$^2$, de préférence dans la plage d'environ 60 à 90 m/s$^2$.

17. Procédé selon la revendication 15 ou 16, **caractérisé en ce que** le pivotement de la partie supérieure (5) du dossier se déroule rapidement de telle sorte que la partie supérieure (5) du dossier se trouve dans la position de sécurité dès qu'un déplacement de la tête de l'utilisateur du siège est provoqué par le choc arrière.

18. Procédé selon la revendication 17, **caractérisé en ce que** dans la position de sécurité, la partie supérieure (5) du dossier se trouve à l'état de repos ou presque à l'état de repos.

19. Procédé selon l'une des revendications 15 à 18, **caractérisé en ce que** le pivotement de la partie supérieure (5) du dossier hors de la position normale d'utilisation jusque dans la position de sécurité se termine au maximum 35 à 60 ms après le choc arrière.

20. Procédé selon l'une des revendications 15 à 19, **caractérisé en ce que** le couple de rotation (M) est créé par un dispositif (6) du dispositif de protection (4, 5, 6, 7, 8, 9, 10, 11, 12) qui, indépendamment de l'occupation du siège (2) du véhicule, crée le couple de rotation (M) qui agit dans le sens de pivotement (S) sur la partie supérieure (5) du dossier, et **en ce que** le choc arrière est détecté par des moyens (7) qui sont reliés fonctionnellement (W, U, B) avec le dispositif (6) de création d'un couple de rotation de telle sorte qu'ils activent le dispositif (6) en cas de choc arrière et que le déplacement de pivotement soit lancé.

21. Procédé selon la revendication 20, **caractérisé en ce que** les moyens (7) pour détecter le choc arrière sont actifs dans un laps de temps maximum d'environ 8 à 17 ms.

22. Procédé selon la revendication 20 ou 21, **caractérisé en ce que** le dispositif (6) de création du couple de rotation est activé au plus environ 15 à 33 ms après le choc arrière.

23. Procédé selon l'une des revendications 15 à 22, **caractérisé en ce que** le pivotement de la partie supérieure (5) du dossier est déclenché en cas d'accélération (a) d'environ 40 à 80 m/s$^2$.

24. Procédé selon l'une des revendications 15 à 23, **caractérisé par** l'utilisation d'un dossier (2) selon l'une des revendications 2 à 17.

## FIG.1

EP 1 077 155 B1

FIG.2

14

FIG. 3